# EUROPÄISCHE PATENTSCHRIFT

(11) **EP 2 667 115 B1**
(45) Veröffentlichungstag und Bekanntmachung des Hinweises auf die Patenterteilung: **16.09.2015**
(21) Anmeldenummer: 12004067.0
(22) Anmeldetag: 25.05.2012
(51) Int. Cl.: F24J 2/52

(54) **Aufständerung für ein Solarmodul**
Support for a solar module
Elévation pour un module solaire

(43) Veröffentlichungstag der Anmeldung: 27.11.2013
(73) Patentinhaber: Weber, Stefan, 76275 Ettlingen (DE)
(72) Erfinder: Weber, Stefan, 76275 Ettlingen (DE)
(74) Vertreter: Wacker, Jost Oliver

(56) Entgegenhaltungen:
- EP-A2- 2 042 822
- EP-A2- 2 372 268
- DE-A1- 10 047 400
- DE-U1-202006 020 180
- DE-U1-202010 008 691
- JP-A- 2008 311 281

## Beschreibung

Die Erfindung betrifft eine Aufständerung für die Lagerung eines ersten Solarmoduls und eines zweiten Solarmoduls, die dachförmig gegeneinander angestellt sind nach dem Oberbegriff des Anspruchs 1. Hierfür sieht die Aufständerung eine Schienenkonstruktion vor, die wenigstens ein Schienenelement aufweist, auf dem sowohl eine bodenseitige Längsseite des ersten Solarmoduls als auch eine bodenseitige Längsseite des zweiten Solarmoduls gelagert werden kann. Die Schienenkonstruktion kann dabei zur Aufständerung eines einzelnen Solarmodulpaares oder auch für mehrere Solarmodulpaare ausgebildet sein. Zudem sind Stützmitteln für die gegenüber dem Schienenelement erhöhte Lagerung einer von der jeweiligen bodenseitigen Längsseite abgewandten firstseitigen Längsseite der beiden Solarmodule vorgesehen. Dabei weisen die Stützmittel eine mit dem Schienenelement verbindbare Vertikalstütze auf, die zu einem freien Ende hin eine Lagereinrichtung aufweist, die an einer ersten Seite ein Vertikallager für das erste Solarmodul und an einer von der ersten Seite abgewandten zweiten Seite ein Vertikallager für das zweite Solarmodul bildet. Auf diese Weise dienen die Stützmittel selbst im Wesentlichen nur zur vertikalen Fixierung der benötigten Lagerhöhe der firstseitigen Längsseiten der beiden Solarmodule, um einen gewünschten Anstellwinkel einzustellen. Die Abstützung bezüglich der horizontalen Richtungen erfolgt dagegen im Wesentlichen über die Rahmen der Solarmodule. Hierdurch kann einerseits der Materialaufwand für die Aufständerung deutlich reduziert werden. Andererseits können auf diese Weise die an den Rahmen standardmäßig vorgesehenen Montagehilfen genutzt werden, wodurch sich auch der Montageaufwand reduzieren lässt. Dabei ist die Höhe der Lagereinrichtung über ein verstell- oder austauschbares Abstandselement einstellbar um einen gewünschten Anstellwinkel der Solarmodule einstellen zu können.

DE 20 2006 020 180 U1 zeigt dabei eine Solarmodulanordnung mit zwei Solarmodulen, die dachförmig gegeneinander angestellt sind und dabei eine geschlossene Dachhaut bilden. In einer Ausführungsform sind dabei Stützelemente vorgesehen, mittels denen der jeweils obere Rand der Solarmodule an einer Dachkonstruktion abstützbar ist.

In EP 2 042 822 A2 ist ein Solarenergie-Komplettsystem beschrieben, bei dem hintereinander angeordnete Solarmodule mittels Gefällekeilen aufgeständert sind. Die Rückseite der zueinander gleich gerichteten Solarmodule wird dabei jeweils durch eine Rückverkleidung abgedeckt.

Aus der DE 100 47 400 A1 ist eine photovoltaische Solarvorrichtung bekannt, bei der zwei Solarmodule dachförmig angeordnet sind. Hierbei sind die beiden Solarmodule an einem Traggerüst mit mindestens zwei Dreiecksrahmen montiert. Die Dreiecksrahmen weisen dabei zwei gleichschenkelige Tragestreben auf, die an einem firstseitigen Ende mittels eines Winkelstückes miteinander verschraubt sind.

Durch die dachförmige Montage der Solarmodule an derartigen Aufständerungen kann die Tageslichtausbeute der Solarvorrichtungen deutliche erhöht werden.

Nachteilig an der bekannten Aufständerung ist jedoch, dass die Konstruktion des Traggerüstes relativ hohe Materialkosten und einen hohen Montageaufwand verursacht.

Die Aufgabe der Erfindung ist es, bei einer gattungsgemäßen Aufständerung für zwei dachförmig gegeneinander angestellte Solarmodule die genannten Nachteile zu vermeiden und eine einfach aufzubauende und kostengünstige Aufständerung zur Verfügung zu stellen.

Diese Aufgabe wird durch eine Aufständerung mit den Merkmalen des Anspruchs 1 gelost.

In einer besonders vorteilhaften Ausführungsform ist das Abstandselement, über das die Lagereinrichtung gegenüber der Schiene abgestützt ist rohrförmig. Durch das Abstandselement kann dabei die Höhe der Lagereinrichtung und damit der Anstellwinkel der Solarmodule festgelegt werden. Durch die rohrförmige Ausbildung des Abstandselementes kann dieses einfach auf eine gewünschte Länge gekürzt werden oder kostengünstig in verschiedenen Längen vorgehalten werden, um die Stützmittel durch bloßen Austausch des Abstandselementes auf einen gewünschten Anstellwinkel der Solarmodule einstellen zu können.

In einer hierzu alternativen Ausführungsform ist das Abstandselement, über das die Lagereinrichtung gegenüber der Schiene abgestützt ist, durch eine an einem Außengewinde gehaltene Mutter gebildet. Zur besseren Abstützung der Lagereinrichtung kann dabei an der Mutter eine zusätzliche Unterlegscheibe oder ein sonstiges Widerlager vorgesehen sein. Hierdurch durch ist eine besonders kostengünstige Herstellung des Abstandselementes möglich, das zudem in der Höhe verstellt werden kann.

Dabei ist es günstig, wenn die Lagereinrichtung in vertikaler Richtung nach oben über eine Schraubverbindung an der Vertikalstütze gesichert ist, wodurch eine ausreichende Sicherung gegen Abheben der Solarmodule gegenüber der Schienenkonstruktion gewährleistet werden kann.

Vorteilhafterweise weist die Lagereinrichtung wenigstens ein Formteil auf, das eine erste Ausnehmung zur Herstellung der Schraubverbindung mit der Vertikalstütze und wenigstens eine zweite Ausnehmung zur Herstellung einer Schraubverbindung mit der firstseitigen Längsseite wenigstens eines der Solarmodule aufweist. Hierdurch ist eine besonders einfache Montage der Solarmodule an der Vertikalstütze möglich. Beispielsweise können hierbei die benötigten Formteile zunächst an den firstseitigen Längsseiten der Solarmodule fest geschraubt werden. Anschließend können die Formteile dann auf die wenigstens eine Vertikalstütze aufgesetzt werden, um hier über die zweite Ausnehmung die weitere Schraubverbindung mit den Stützmitteln herzustellen.

Dabei ist es günstig, wenn die wenigstens eine Ausnehmung durch ein Langloch gebildet ist, wodurch beispielsweise ein leichteres Aufsetzen auf die Vertikalstütze oder eine gewisse Feinjustierung möglich ist.

Vorteilhafterweise ist die Vertikalstütze über eine Schraubverbindung mit dem Schienenelement verbunden, wodurch eine ausreichend stabile und einfache Vormontage der Vertikalstütze an der Schienenkonstruktion noch vor Anbringen der Solarmodule möglich ist.

Ferner ist es günstig, wenn die Schraubeverbindung eine an dem Schienenelement festlegbare Hammerkopfschraube umfasst, die mit einem Gewindeende der Vertikalstütze verbunden ist. Die Hammerkopfschraube kann dabei mit dem Gewindeende verschraubt oder alternativ mit diesem einteilig ausgebildet sein. Auf diese Weise kann die Schienenkonstruktion von oben hintergriffen werden, um diese auch in vertikaler Richtung nach oben zugfest mit der Vertikalstütze zu verbinden. Hierdurch können die Vertikalstütze und die daran abgestützten Solarmodule gegen Abheben gegenüber der Schienenkonstruktion gesichert werden.

In einer weiteren vorteilhaften Ausführungsform weist die Vertikalstütze ein mit der Hammerkopfschraube zugfest verbindbares Zugglied auf, das sich durch die Abstandshülse hindurch erstreckt und an dem die Lagereinrichtung in vertikaler Richtung nach oben festlegbar ist. Hierdurch ist eine einfache und zugfeste Verbindung zwischen der Schienenkonstruktion und den an den Lagereinrichtungen festgeschraubten Solarmodulen herstellbar.

Ferner ist es günstig, wenn die Solarmodule auf zwei parallelen Schienenelementen lagern, die senkrecht zu den Längsseiten ausgerichtet sind, wodurch eine einfache Montage von mehreren Solarmodulpaaren hintereinander möglich ist.

In einer besonders vorteilhaften Ausführungsform ist die wenigstens eine Lagereinrichtung mit an den firstseitigen Längsseiten der Solarmodule standardmäßig vorgesehenen benachbarten Befestigungsbohrungen direkt verschraubt, wodurch eine kostengünstig herzustellende und besonders stabile Schraubverbindung zwischen dem Solarmodul und der Aufständerung möglich ist.

Ferner ist es günstig, wenn an den Schienenelementen wenigsten ein Lagermittel vorgesehen ist, das mit an den bodenseitigen Längsseiten der Solarmodule standardmäßig vorgesehenen benachbarten Befestigungsbohrungen direkt verschraubt ist. Derartige Lagermittel können beispielsweise vorab mit den Solarmodulen verschraubt werden. Nach der Befestigung der firstseitigen Längsseiten an den erhöhten Lagereinrichtungen können die Lagermittel dann bodenseitig mit der Schienenkonstruktion verbunden werden, um die Solarmodule vollständig an dieser zu sichern.

In den Figuren ist eine beispielhafte Ausführungsform der Erfindung dargestellt. Es zeigen:
- Figur 1: eine perspektivische Ansicht einer Solarvorrichtung mit zwei auf einer Aufständerung montierten Solarmodulen,
- Figur 2: eine Seitenansicht der Solarvorrichtung in Richtung II aus Fig. 1 und
- Figur 3: eine perspektivische Explosionsdarstellung der Solarvorrichtung gemäß Fig.1.

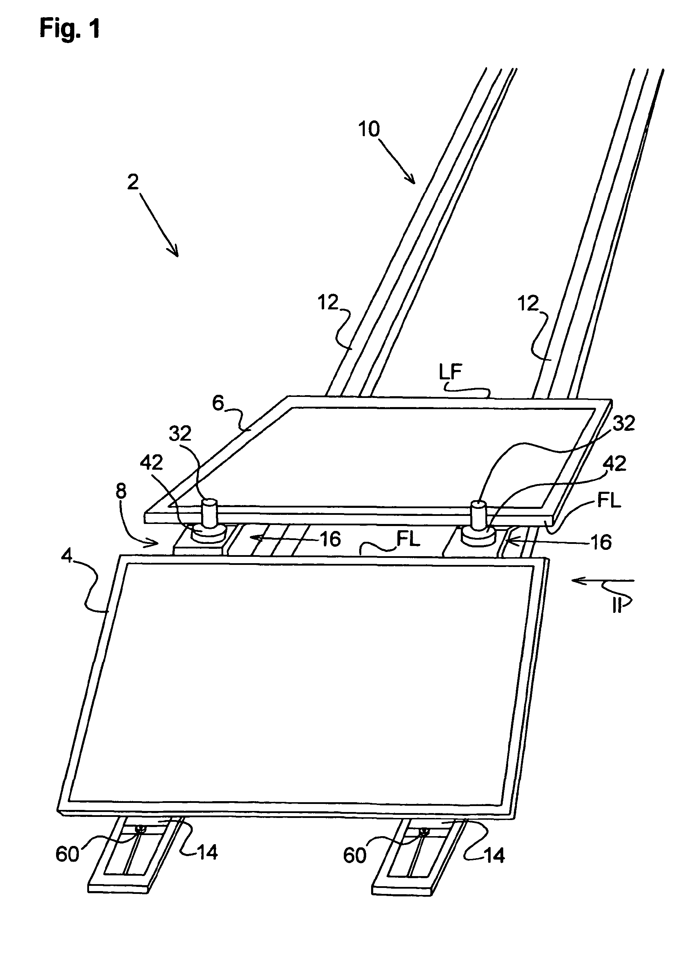

Fig. 1 zeigt eine Solarvorrichtung 2 zur Verwendung auf einem Flachdach beziehungsweise einem Untergrund mit geringer Neigung, das ein erstes Solarmodul 4 und ein zweites Solarmodul 6 aufweist, die zueinander dachförmig angeordnet sind. Hierzu ist eine Aufständerung 8 mit einer Schienenkonstruktion 10 vorgesehen, die mindestens zwei parallel verlegte Schienenelemente 12 aufweist.

Auf diesen Schienenelementen 12 ist jeweils eine bodenseitige Längsseite LF der beiden Solarmodule 4, 6 über jeweils zwei bodenseitige Lagermittel 14 gelagert.

Um die beiden Solarmodule 4, 6 in einem gewissen Anstellwinkel zu halten, sind ferner Stützmittel 16 vorgesehen, mittels denen jeweils eine von der bodenseitigen Längsseite BL abgewandte firstseitige Längsseite FL beider Solarmodule 4, 6 gegenüber den Schienenelementen 12 erhöht gelagert werden kann.

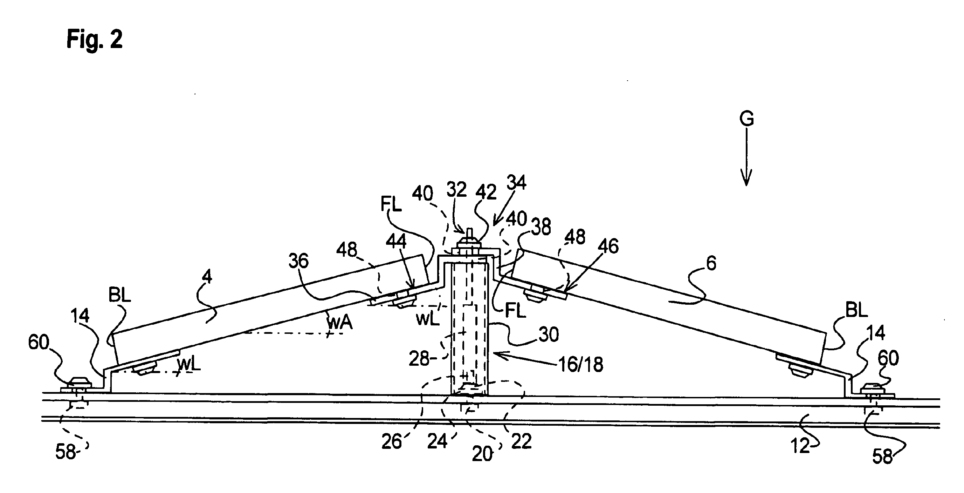

Wie insbesondere aus Fig. 2 zu entnehmen ist, bilden die Stützmittel 16 eine Vertikalstütze 18, zum Abstützen der firstseitigen Längsseiten FL in Gravitationsrichtung G. Hierzu weisen die Stützmittel 16 an jedem Schienenelement 12 eine mit dieser in Eingriff stehende Hammerkopfschraube 20 auf, die mittels einer Mutter 22 und einer Unterlegscheibe 24 an dem Schienenelement 12 festgezogen ist. Ferner ist an einem an der Mutter 22 überstehenden Gewindeabschnitt 26 ein Zugglied 28 verschraubt, das sich durch ein rohrförmiges Abstandselement 30 hindurch erstreckt und an dessen als Außengewinde ausgebildeten oberen Endabschnitt 32 eine Lagereinrichtung 34 festgeschraubt ist.

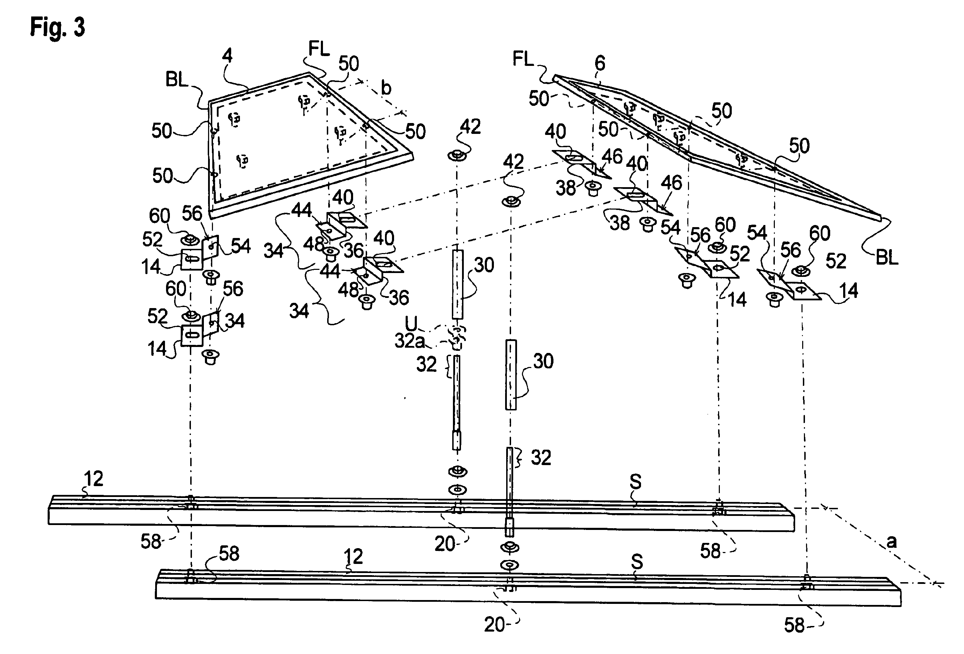

Alternativ zu der dargestellten Ausführungsform können die Hammerkopfschraube 20 und das Zugglied 28 hierbei auch einteilig ausgebildet sein. Ferner kann alternativ zu dem rohrfömigen Abstandselement 30 auch ein mutterförmiges Element 30a vorgesehen sein, das auf das Außengewinde des Zuggliedes 28 aufgeschraubt ist, und die Lagereinrichtung 34 unter Zwischenlage einer Unterlegscheibe U trägt, wie in Fig. 3 durch strichpunktierte Linien dargestellt.

Die Lagereinrichtung 34 besteht dabei im Wesentlichen aus zwei Formteilen 36, 38 mit jeweils einer als Langloch ausgebildeten ersten Ausnehmung 40, die von dem oberen Endabschnitt 32 durchragt wird, auf dem dann wiederum von oben eine Mutter 42 aufgeschraubt ist, die die Formteile 36, 38 zwischen sich und dem Abstandselement 30 festklemmt.

Beide Formteile 36, 38 stehen zu voneinander abgewandten Seiten von dem Abstandselement 30 ab und bilden dabei an einer ersten Seite ein erstes Vertikallager 44 für das erste Solarmodul 4 und an einer zweiten Seite ein zweites Vertikallager 46 für das zweite Solarmodul 6. Im Bereich dieser Vertikallager 44, 46 ist dabei jeweils eine zweite Ausnehmung 48 vorgesehen, die mit einer benachbarten von mehreren Befestigungsbohrungen 50 der firstseitigen Längsseite FL des jeweiligen Solarmoduls 4, 6 verschraubt ist, die an diesen standardmäßig eingelassen sind, wie in Fig. 3 dargestellt.

Die Schienenelemente 12 sind hierzu parallel zueinander derart angeordnet, dass deren Aufnahmeschlitze S in einem Abstand a angeordnet sind, der einem Abstand b entspricht, in dem die standardmäßigen Befestigungsbohrungen 50 in die Rahmen der vorgesehenen Solarmodule 4, 6 eingelassen sind, wobei die Solarmodule 4, 6 wiederum senkrecht zu den Schienenelementen 12 ausgerichtet sind.

Ferner sind die Solarmodule 4, 6 über die bodenseitigen Lagermittel 14 mit den Schienenelementen 12 verschraubt, wobei auch hier die Schraubverbindung über mit den Schienenelementen 12 verschraubte erste Ausnehmungen 52 und über zweite Ausnehmungen 54 erfolgt, die mit benachbarten bodenseitigen Befestigungsbohrungen 50 des jeweiligen Solarmoduls 4, 6 verschraubt werden. Auch die zweiten Ausnehmungen 54 der bodenseitigen Lagermittel 14 sind dabei jeweils in einen ein Vertikallager 56 bildenden Abschnitt der Lagermittel 14 eingelassen.

Sowohl die Vertikallager 44, 46 des ersten und zweiten Formteils 36, 38 als auch die beiden Vertikallager der der bodenseitigen Lagermittel 14 weisen dabei im montierten Zustand einen Lagerwinkel wL gegenüber der Horizontalen auf, der dem gewünschten Anstellwinkel wA der beiden Solarmodule 4, 6 entspricht und der auf eine Länge I des Abstandelementes 30 abgestimmt ist.

Zur Montage der Solarvorrichtung 2 werden zunächst die Schienenelemente 12 parallel zueinander verlegt und die Formteile 36, 38 und die bodenseitigen Lagermittel 14 mit den jeweils zweiten Ausnehmungen 48, 54 an den Solarmodulen 4, 6 festgeschraubt. Ferner werden die Vertikalstützen 18 an den Schienenelementen 12 vormontiert.

Anschließend können dann die Formteile 36, 38 mit ihren ersten Ausnehmungen 40 nacheinander über die Endabschnitte 32 der Zugglieder 28 gesteckt und auf das jeweilige Abstandselement 30 aufgesetzt werden. Anschließend erfolgt die Sicherung in vertikaler Richtung mittels der Muttern 42.

Hiernach werden dann die unter Zwischenlage der bodenseitigen Lagermittel 14 auf den Schienenelementen 12 aufliegenden bodenseitigen Längsseiten BL mittels Hammerkopfschrauben 58 und Muttern 60 über die ersten Ausnehmungen 52 an den Schienenelementen 12 festgeschraubt.

## Patentansprüche

1. Aufständerung (8) für die Lagerung eines ersten Solarmoduls (4) und eines zweiten Solarmoduls (6), die dachförmig gegeneinander angestellt sind,
mit einer Schienenkonstruktion (10), die wenigstens ein Schienenelement (12) aufweist, auf dem sowohl eine bodenseitige Längsseite (BL) des ersten Solarmoduls (4) als auch eine bodenseitige Längsseite (BL) des zweiten Solarmoduls (6) lagerbar ist,
sowie mit Stützmitteln (16) für die gegenüber dem Schienenelement (12) erhöhte Lagerung einer von der jeweiligen bodenseitigen Längsseite (BL) abgewandten firstseitigen Längsseite (FL) der beiden Solarmodule (4, 6), wobei
die Stützmittel (16) eine mit dem Schienenelement (12) verbindbare Vertikalstütze (18) aufweisen, die zu einem freien Ende hin eine Lagereinrichtung (34) aufweist, die an einer ersten Seite ein Vertikallager (44) für das erste Solarmodul (4) und an einer von der ersten Seite abgewandten zweiten Seite ein Vertikallager (46) für das zweite Solarmodul (6) bildet,
**dadurch gekennzeichnet, dass** die Höhe der Lagereinrichtung (34) über ein Abstandselement einstellbar ist.

2. Aufständerung nach Anspruch 1, **dadurch gekennzeichnet, dass** die Vertikalstütze (18) ein rohrförmiges Abstandselement (30) aufweist, über das die Lagereinrichtung (34) gegenüber der Schiene (12) abgestützt ist.

3. Aufständerung nach Anspruch 1, **dadurch gekennzeichnet, dass** die Vertikalstütze (18) ein durch eine an einem Außengewinde gehaltene Mutter gebildetes Abstandselement aufweist, über das die Lagereinrichtung (34) gegenüber der Schiene (12) abgestützt ist.

4. Aufständerung nach einem der Ansprüche 1 bis 3, **dadurch gekennzeichnet, dass** die Lagereinrichtung (34) in vertikaler Richtung nach oben über eine Schraubverbindung an der Vertikalstütze (18) gesichert ist.

5. Aufständerung nach einem der Ansprüche 1 bis 4, **dadurch gekennzeichnet, dass** die Lagereinrichtung (34) wenigstens ein Formteil (36, 38) aufweist, das eine erste Ausnehmung (40) zur Herstellung der Schraubverbindung mit der Vertikalstütze (18) und wenigstens eine zweite Ausnehmung (48) zur Herstellung einer Schraubverbindung mit der firstseitigen Längsseite (FL) wenigstens eines der Solarmodule (4, 6) aufweist.

6. Aufständerung nach Anspruch 5, **dadurch gekennzeichnet, dass** wenigstens eine Ausnehmung (40, 48) durch ein Langloch gebildet ist.

7. Aufständerung nach einem der Ansprüche 1 bis 6, **dadurch gekennzeichnet, dass** die Vertikalstütze (18) über eine Schraubverbindung mit dem Schienenelement (12) verbunden ist.

8. Aufständerung nach Anspruch 7, **dadurch gekennzeichnet, dass** die Schraubverbindung eine an dem Schienenelement (12) festlegbare Hammerkopfschraube (20) umfasst, die mit einem Gewindeende der Vertikalstütze (18) verbunden ist.

9. Aufständerung nach einem der Ansprüche 1 bis 8, **dadurch gekennzeichnet, dass** die Vertikalstütze (18) ein mit der Hammerkopfschraube (20) zugfest verbindbares Zugglied (28) aufweist, das sich durch das Abstandselement (30) hindurch erstreckt und an dem die Lagereinrichtung (34) festlegbar ist.

10. Solarvorrichtung (2) mit einer Aufständerung (8) nach einem der Ansprüche 1 bis 9, auf der das erste Solarmodul (4) und das zweite Solarmodul (6) gelagert sind, **dadurch gekennzeichnet, dass** die Solarmodule (4, 6) auf zwei parallelen Schienenelementen (12) lagern, die senkrecht zu den Längsseiten (BL, FL) ausgerichtet sind.

11. Solarvorrichtung nach Anspruch 10, **dadurch gekennzeichnet, dass** die Schienenelemente (12) jeweils auf Höhe von Befestigungsbohrungen (50) der Solarmodule (4, 6) angeordnet sind.

12. Solarvorrichtung nach einem der Ansprüche 1 bis 11, **dadurch gekennzeichnet, dass** die Lagereinrichtung (34) mit an den firstseitigen Längsseiten (FL) der Solarmodule (4, 6) standardmäßig vorgesehenen benachbarten Befestigungsbohrungen (50) direkt verschraubt ist.

13. Solarvorrichtung nach einem der Ansprüche 1 bis 12, **dadurch gekennzeichnet, dass** an den Schienenelementen (12) wenigsten ein Lagermittel (14) vorgesehen ist, das mit an den bodenseitigen Längsseiten (BL) der Solarmodule (4, 6) standardmäßig vorgesehenen benachbarten Befestigungsbohrungen (50) direkt verschraubt ist.

## Claims

1. Support (8) for the mounting of a first solar module (4) and a second solar module (6), which are arranged opposite one another in the form of a roof.
with a rail structure (10), comprising at least one rail element (12), on which can be mounted both a floor-side longitudinal side (BL) of the first solar module (4) as well as a floor-side longitudinal side (BL) of the second solar module (6).
and with support means (16) for the elevated mounting, in relation to the rail element (12) of a roof ridge-side longitudinal side (FL) of the two solar modules (4, 6), facing away from the respective longitudinal side (BL),
wherein the support means (16) comprise a vertical support, which can be connected to the rail element (12), said vertical support comprising a mounting device (34) towards one free end, said mounting device (34) forming on a first side a vertical bearing (44) for the first solar module (4) and, on a second side facing away from the first side, a vertical bearing (46) for the second solar module (6),
**characterized in that** the height of the mounting device (34) can be adjusted by means of a spacer element.

2. Support according to claim 1, **characterized in that** the vertical support (18) comprises a tubular spacer element (30), by means of which the mounting device (34) is supported opposite the rail (12).

3. Support according to claim 1, **characterized in that** the vertical support (18) comprises a spacer element, formed by a nut held on a outer thread, by means of which the mounting device (34) is supported in relation to the rail (12).

4. Support according to one of claims 1 to 3, **characterized in that** the mounting device (34) is secured in the vertical direction upwards by means of a screw connection on the vertical support (18).

5. Support according to one of claims 1 to 4, **characterized in that** the mounting device (34) comprises at least one shaped part (36, 38), which comprises a first cut-out aperture (40) for establishing the screw connection to the vertical support (18) and at least one second cut-out aperture (48) for establishing a screw connection to the roof ridge-side longitudinal side (FL) of at least one of the solar modules (4, 6).

6. Support according to claim 5, **characterized in that** at least one cut-out aperture (40, 48) is formed by a longitudinal hole.

7. Support according to one of claims 1 to 6, **characterized in that** the vertical support (18) can be connected by a screw connection to the rail element (12).

8. Support according to claim 7, **characterized in that** the screw connection comprises a hammer-head screw (20) which can be secured to the rail element (12), said screw being connected to one thread end of the vertical support (18).

9. Support according to one of claims 1 to 8, **characterized in that** the vertical support (18) comprises a draw element (28), which can be connected to the hammer-head screw (20), said draw element (28) extending through the spacer element (30) and securable to the mounting device (34).

10. Solar device (12) with a support (8) according to one of claims 1 to 9, on which the first solar module (4) and the second solar module (6) are mounted, **characterized in that** the solar modules (4, 6) are mounted on two parallel rail elements (12), which are aligned perpendicular to the longitudinal sides (BL, FL).

11. Solar device according to claim 10, **characterized in that** the rail elements (12) are arranged in each case at the height of securing holes (50) of the solar modules (4, 6).

12. Solar device according to one of claims 1 to 11, **characterized in that** the mounting device (34) is screwed directly via adjacent securing holes (50), provided as standard on the roof ridge-side longitudinal sides (FL) of the solar modules (4, 6).

13. Solar device according to one of claims 1 to 12, **characterized in that** at least one mounting means (14) is provided at the rail elements (12), said mounting means (14) being screwed directly via adjacent securing holes (50) provided as standard on the base-side longitudinal sides (BL) of the solar modules (4, 6).

## Revendications

1. Piètement (8) pour le montage d'un premier module solaire (4) et d'un deuxième module solaire (6), qui sont posés l'un par rapport à l'autre en forme de toit,
comprenant une construction de rails (10) qui présente au moins un élément de rail (12) sur lequel peut être monté à la fois un côté longitudinal inférieur (BL) du premier module solaire (4) et un côté longitudinal inférieur (BL) du second module solaire (6),
ainsi que comprenant des moyens de support (16) pour le montage surélevé par rapport à l'élément de rail (12) d'un côté longitudinal supérieur (FL), opposé au côté longitudinal inférieur (BL) respectif, des deux modules solaires (4, 6),
piètement dans lequel les moyens de support (16) présentent un support vertical (18) pouvant être relié avec l'élément de rail (12), le support vertical présentant à une extrémité libre un dispositif de montage (34), qui forme sur un premier côté un appui vertical (44) pour le premier module solaire (4) et sur un deuxième côté opposé au premier côté, un appui vertical (46) pour le second module solaire (6),
**caractérisé en ce que** la hauteur du dispositif de montage (34) est réglable par l'intermédiaire d'une entretoise.

2. Piètement selon la revendication 1, **caractérisé en ce que** le support vertical (18) présente une entretoise (30) tubulaire, par l'intermédiaire de laquelle le dispositif de montage (34) est supporté par rapport au rail (12).

3. Piètement selon la revendication 1, **caractérisé en ce que** le support vertical (18) présente une entretoise formée d'un écrou maintenu sur un filetage extérieur, par l'intermédiaire de laquelle le dispositif de montage (34) est supporté par rapport au rail (12).

4. Piètement selon l'une des revendications 1 à 3, **caractérisé en ce que** le dispositif de montage (34) est bloqué dans la direction verticale vers le haut sur le support vertical (18), par l'intermédiaire d'un assemblage vissé.

5. Piètement selon l'une des revendications 1 à 4, **caractérisé en ce que** le dispositif de montage (34) présente au moins une pièce moulée (36, 38), qui présente un premier évidement (40) pour la réalisation de l'assemblage vissé avec le support vertical (18) et au moins un deuxième évidement (48) pour la réalisation d'un assemblage vissé avec le côté longitudinal supérieur (FL) d'au moins un des modules solaires (4, 6).

6. Piètement selon la revendication 5, **caractérisé en ce qu'**au moins un évidement (40, 48) est formé par un trou oblong.

7. Piètement selon l'une des revendications 1 à 6, **caractérisé en ce que** le support vertical (18) est relié avec l'élément de rail (12) par l'intermédiaire d'un assemblage vissé.

8. Piètement selon la revendication 7, **caractérisé en ce que** l'assemblage vissé comprend une vis à tête rectangulaire (20) pouvant être fixée sur l'élément de rail (12), qui est reliée avec une extrémité filetée du support vertical (18).

9. Piètement selon l'une des revendications 1 à 8, **caractérisé en ce que** le support vertical (18) présente un tirant (28) pouvant être relié de manière résistante à la traction avec la vis à tête rectangulaire (20), le tirant traversant l'entretoise (30) et le dispositif de montage (34) étant fixable au tirant.

10. Dispositif solaire (2) comprenant un piètement (8) selon l'une des revendications 1 à 9, sur lequel sont montés le premier module solaire (4) et le deuxième module solaire (6), **caractérisé en ce que** les modules solaires (4, 6) sont montés sur deux éléments de rail (12) parallèles qui sont alignés perpendiculairement aux côtés longitudinaux (BL, FL).

11. Dispositif solaire selon la revendication 10, **caractérisé en ce que** les éléments de rail (12) sont agencés respectivement au niveau de trous de fixation (50) des modules solaires (4, 6).

12. Dispositif solaire selon l'une des revendications 1 à 11, **caractérisé en ce que** le dispositif de montage (34) est vissé directement avec les trous de fixation (50) voisins prévus de façon standard sur les côtés longitudinaux supérieurs (FL) des modules solaires (4, 6).

13. Dispositif solaire selon l'une des revendications 1 à 12, **caractérisé en ce qu'**il est prévu sur les éléments de rail (12), au moins un moyen de montage (14) qui est vissé directement avec les trous de fixation (50) voisins prévus de façon standard sur les côtés longitudinaux inférieurs (BL) des modules solaires (4, 6).
